# EUROPEAN PATENT APPLICATION

(11) **EP 4 507 090 A1**
(43) Date of publication of application: **12.02.2025**
(21) Application number: 22936790.9
(22) Date of filing: 12.04.2022
(51) Int. Cl.: H01M 50/209, H01M 50/249

(54) **BATTERY CELL CASING, BATTERY CELL, BATTERY, AND ELECTRIC APPARATUS**

(71) Applicant: Contemporary Amperex Technology (Hong Kong) Limited, Central, Central And Western District (HK)
(72) Inventor: CHEN, Wei, Ningde, Fujian 352100 (CN); LI, Chuan, Ningde, Fujian 352100 (CN); GUO, Zhijun, Ningde, Fujian 352100 (CN); LEI, Yuyong, Ningde, Fujian 352100 (CN); ZHENG, Donglai, Ningde, Fujian 352100 (CN)
(74) Representative: Gong, Jinping
(86) International application number: PCT/CN2022/086247
(87) International publication number: WO 2023/197133

(57) **Abstract**

The embodiments of the application provide a housing of a battery cell, a battery cell, a battery and an electric device. The housing has an opening at an end in a first direction. The housing includes a first side plate, a second side plate and a first connection plate, the first side plate and the second side plate are arranged in a circumferential direction of the opening, the first connection plate is connected between the first side plate and the second side plate, and at least a part of the first connection plate is arcuate. The first side plate includes a first plate portion, a second plate portion and a third plate portion, the second plate portion is connected between the first plate portion and the first connection plate, and the third plate portion is located at a side of the first plate portion close to the opening. A thickness of the first plate portion is less than a thickness of the second plate portion and a thickness of the third plate portion. The embodiments of the application may increase an internal space of the housing, improve the energy density of battery cells, reduce a risk of the housing cracking and enhance security.

## Description

### TECHNICAL FIELD

The application relates to the field of battery technology, and in particular to a housing of a battery cell, a battery cell, a battery and an electric device.

### BACKGROUND

Battery cells are widely used in electronic equipments such as mobile phones, laptop computers, electric bicycles, electric automobiles, electric aircrafts, electric ships, electric toy cars, electric toy ships, electric toy planes, and electric tools etc. Battery cells may include nickel-cadmium battery cells, nickel-hydrogen battery cells, lithium-ion battery cells, secondary alkaline zinc-manganese battery cells etc.

In development of the battery technology, how to improve the energy density of battery cells is an important development direction in the battery technology.

### SUMMARY

The application provides a housing of a battery cell, a battery cell, a battery and an electric device, which can improve the energy density of battery cells.

In a first aspect, embodiments of the application provide a housing of a battery, and the housing has an opening at an end in a first direction. The housing includes a first side plate, a second side plate and a first connection plate, the first side plate and the second side plate are arranged in a circumferential direction of the opening, the first connection plate is connected between the first side plate and the second side plate, and at least a part of the first connection plate is arcuate. The first side plate includes a first plate portion, a second plate portion and a third plate portion, the second plate portion is connected between the first plate portion and the first connection plate, and the third plate portion is located at a side of the first plate portion close to the opening. A thickness of the first plate portion is less than a thickness of the second plate portion and a thickness of the third plate portion.

The technical solution described above can reduce the thickness of the first plate portion of the first side plate to increase the internal space of the housing and reserve more space for the electrode assembly and the electrolyte solution, thereby enhancing the energy density of the battery cell and improving the charge-discharge performance of the battery cell. The arcuate part of the first connection plate may release stress and reduce stress concentration during forming the housing, the thickness of the second plate portion is greater than the thickness of the first plate portion, so that the second plate portion close to the first connection plate has a higher strength than the first plate portion, so as to reduce a risk of the second plate portion cracking when the battery cell is subjected to an external impact and provide security. Since the thickness of the third plate portion is greater than the thickness of the first plate portion, the third plate portion may be used to be connected to the end cap of the battery cell, so as to enhance the connection strength between the housing and the end cap, reduce a risk of the housing cracking and enhance security.

In some embodiments, the second plate portion is connected directly to the third plate portion to enhance the overall strength of the first side plate and reduce a risk of the first side plate cracking.

In some embodiments, the thickness of the second plate portion is equal to the thickness of the third plate portion in order to reduce difficulty of forming the housing.

In some embodiments, the thickness of the first plate portion is T1, the thickness of the second plate portion is T2, and T1 and T2 satisfy: 0.05mm≤T2-T1≤1mm.

When the value of T1 is determined, the larger T2 is, the higher the strength of the second plate portion is, while the smaller the internal space of the housing is; when the value of T1 is determined, the smaller T2 is, the lower the strength of the second plate portion is, while the larger the internal space of the housing is. When the value of T2 is determined, the larger T1 is, the higher the strength of the first plate portion is, while the smaller the internal space of the housing is, when the value of T2 is determined, the smaller T1 is, the lower the strength of the first plate portion is, while the larger the internal space of the housing is. In the technical solution described above, the value of T2-T1 is limited to 0.05mm-1mm in order to balance the strength of the housing and the capacity of the housing.

In some embodiments, T1 and T2 satisfy: 0.1mm≤T2-T1≤0.7mm.

In some embodiments, the thickness of the first plate portion T1 is 0.1mm-0.8mm.

In some embodiments, the thickness of the second plate portion T2 is 0.4mm-1.5mm.

In some embodiments, the first side plate further includes a first transition portion connected between the first plate portion and the second plate portion. In a direction from the first plate portion towards the second plate portion, a thickness of the first transition portion increases gradually.

In the technical solution described above, by providing the first transition portion, it is possible to achieve a smooth transition between the first plate portion and the second plate portion, reduce difficulty of forming the housing, reduce stress concentration and reduce a risk of the first side plate cracking.

In some embodiments, the first plate portion and the second plate portion are arranged in a second direction perpendicular to the first direction. A size of the second plate portion in the second direction is L1, a size of the first transition portion in the second direction is L2, and L1 and L2 satisfy: 0.2≤L1/L2≤5.

When the value of L1+L2 is constant, the smaller the value of L1/L2 is, the greater the acting force transmitted to the first transition portion during forming the housing is, and the higher the risk of the first transition portion cracking is; when the value of L1+L2 is constant, the larger the value of L1/L2 is, the steeper the transition surface of the first transition portion is, the more obvious the step formed between the first plate portion and the second plate portion is, and the higher the difficulty of forming the housing is. In the technical solution described above, the value of L1/L2 is limited to 0.2-5 in order to balance the forming difficulty and strength of the housing.

In some embodiments, the size of the second plate portion in the second direction L1 is 0.5mm-10mm, and the size of the first transition portion in the second direction L2 is 0.5mm-10mm.

In some embodiments, in the first direction, an end of the first plate portion away from the third plate portion is flush with an end of the second plate portion away from the third plate portion. The second plate portion may separate the first plate portion from the first connection plate to reduce the risk of the first plate portion cracking.

In some embodiments, the housing further includes a third side plate and a second connection plate. The third side plate and the opening are arranged opposite in the first direction, the second connection plate is connected between the first side plate and the third side plate, and at least a part of the second connection plate is arcuate. The first plate portion is connected directly to the second connection plate.

In the technical solution described above, the arcuate part of the second connection plate may release the stress during forming the housing to reduce stress concentration. The first plate portion is connected directly to the second connection plate, so that the step at the connection of the first plate portion and the second connection plate may be reduced, the risk of local compression of the electrode assembly may be reduced, and the performance of the electrode assembly may be improved.

In some embodiments, the housing includes two first side plates and two second side plates, the two second side plates are arranged opposite in a second direction, the two first side plates are arranged opposite in a third direction, and each two of the first direction, the second direction and the third direction are perpendicular to each other. The adjacent first side plate and second side plate are connected by the first connection plate. The first side plate is provided with two said second plate portions arranged at opposite sides of the first plate portion in the second direction respectively.

In the technical solution described above, the two first connection plates are connected to the first plate portion through the two second plate portions respectively, and during forming the housing, the second plate portion has a higher strength, so that it can withstand the stress transmitted from the first connection plate, thereby reducing the risk of cracking and providing security.

In some embodiments, a size of the first side plate in the second direction is greater than a size of the second side plate in the third direction.

In the technical solution described above, since the first side plate has a larger area as compared to the second side plate, the region where the first side plate can be thinned is larger, so that the internal space of the housing may be effectively increased to enhance the capacity of the battery cell.

In some embodiments, the second plate portion and the third plate portion protrude out of an inner surface of the first plate portion.

In some embodiments, the outer surface of the first plate portion, the outer surface of the second plate portion, and the outer surface of the third plate portion are flush with each other to ensure the flatness of the outer surface of the first side plate and improve the appearance of the housing.

In some embodiments, the first side plate further includes a second transition portion connected between the first plate portion and the third plate portion. In a direction from the first plate portion towards the second plate portion, a thickness of the second transition portion increases gradually.

In the technical solution described above, the second transition portion may achieve a smooth transition between the first plate portion and the third plate portion, reduce difficulty of forming the housing, reduce stress concentration and reduce a risk of the first side plate cracking.

In some embodiments, a size of the third plate portion in the first direction is L3, a size of the second transition portion in the first direction is L4, and L3 and L4 satisfy: 0.3≤L3/L4≤3.

When the value of L3+L4 is constant, the smaller the value of L3/L4 is, the smaller the region of the first side plate for connection with the end cap is, the lower the connection strength between the housing and the end cap is, the larger the acting force transmitted to the second transition portion during assembly of the housing and the end cap is, and the higher the risk of the second transition portion cracking is, when the value of L3+L4 is constant, the larger the value of L3/L4 is, the steeper the transition surface of the second transition portion is, the more obvious the step formed between the first plate portion and the third plate portion is, and the higher the difficulty of forming the housing is. The technical solution described above, the value of L3/L4 is limited to 0.3-3 in order to balance the difficulty of forming the housing and the connection strength between the housing and the end cap.

In some embodiments, the size L3 of the third plate portion in the first direction is 0.3mm-10mm, and the size L4 of the second transition portion in the first direction is 0.3mm-10mm.

In some embodiments, the second side plate is provided with a recess sunk from an end surface of the second side plate in the first direction. The thickness of the portion of the second side plate corresponding to the side surface of the recess is greater than the thickness of the first plate portion.

In the technical solution described above, the bottom surface of the recess may be used to support the end cap of the battery cell and is able to limit the end cap during the end cap being inserted into the housing to prevent the end cap from being excessively inserted into the housing. The portion of the second side plate corresponding to the side surface of the recess may be used to be connected to the end cap, and even if the second side plate is provided with the recess in this embodiment, the strength of the portion of the second side plate corresponding to the side surface of the recess can be ensured to reduce the risk of the second side plate cracking.

In some embodiments, in the first direction, an end of the third plate portion close to the first plate portion goes beyond a bottom surface of the recess.

In the technical solution described above, the bottom surface of the recess is used to support the end cap and limit the position of the end cap. In this embodiment, the end of the third plate portion close to the first plate portion goes beyond the bottom surface of the recess, so that the end of the third plate portion close to the first plate portion goes beyond the end cap, thereby ensuring the strength of the portion of the first side plate connected to the end cap, reducing the risk of the first side plate cracking, and enhancing security.

In a second aspect, the embodiments of the application provide a battery cell including the housing, the electrode assembly and the end cap provided by any embodiment of the first aspect. The electrode assembly is accommodated inside the housing, and in the thickness direction of the first side plate, a gap is provided between the electrode assembly and the second plate portion. The end cap is used to cap the opening and be connected to the third plate portion.

In the technical solution described above, the gap between the electrode assembly and the second plate portion may reduce the risk of the second plate portion pressing the electrode assembly, reduce stress concentration, and improve the charge-discharge performance of the electrode assembly. Since the thickness of the third plate portion is greater than the thickness of the first plate portion, the third plate portion may be used to be connected to the end cap, so as to enhance the connection strength between the housing and the end cap, reduce a risk of the housing cracking and enhance security.

In some embodiments, the third plate portion is used to be welded to the end cap and form a welding portion. In the first direction, the end of the third plate portion close to the first plate portion goes beyond the welding portion.

In the technical solution described above, after the welding portion is formed, thermal stress may remain in a region of the third plate portion close to the welding portion. In this embodiment, the thickness of the third plate portion close to the opening is increased, and the end of the third plate portion close to the first plate portion goes beyond the welding portion, so as to ensure the strength of the region of the first side plate near the welding portion, reduce the risk of the first side plate cracking and enhance security.

In some embodiments, the electrode assembly is of a wound structure and includes a straight section and a bent section, the bent section is connected to an end of the straight section in the second direction, and each two of the first direction, the second direction and the thickness direction are perpendicular to each other. In the thickness direction, the first plate portion covers at least a part of the straight section, the second plate portion covers at least a part of the bent section, and a gap is formed between the second plate portion and the bent section.

In the technical solution described above, since the bent section occupies a smaller space in the thickness direction, the second plate portion can utilize the space reserved by the bent section to ensure the thickness of itself and reduce the risk of the second plate portion pressing the electrode assembly.

In some embodiments, in the thickness direction, the third plate portion does not overlap with the straight section and the third plate portion does not overlap with the bent section, so as to reduce the risk of the third plate portion pressing the bent section and the straight section, reduce stress concentration, and improve the charge-discharge performance of the electrode assembly.

In some embodiments, the battery cell further includes an insulation member arranged at a side of the end cap facing towards the straight section and abutting with the straight section. In a direction away from the end cap, a surface of the insulation member abutting with the straight section goes beyond an end of the first plate portion facing towards the third plate portion.

In the technical solution described above, the insulation member can insulate the end cap from the straight section, so as to reduce the risk of the the end cap conducting the positive and negative electrode sheets in the straight section and enhance security. The insulation member abuts with the straight region in the first direction, so as to reduce the shaking amplitude of the straight region when the battery cell vibrates, reduce the risk of dislocation of the positive and negative electrode sheets, and improve the charge-discharge performance of the electrode assembly. The insulation member can limit the position of the straight section in the first direction so as to reduce the possibility of the straight section colliding with the third plate portion when the battery cell vibrates and reduce the risk of the third plate portion cracking.

In a third aspect, the embodiments of the application provide a battery including the battery cell provided by any embodiment of the second aspect.

In a fourth aspect, the embodiments of the application provide an electric device including the battery cell provided by any embodiment of the second aspect used to provide electrical energy.

### BRIEF DESCRIPTION OF THE DRAWINGS

In order to illustrate the technical solutions in embodiments of the application more clearly, the drawings to be used in the embodiments of the application will be briefly described below. Obviously, the drawings described below are merely some embodiments of the application, and it is also possible for a person of ordinary skill in the art to obtain further drawings from these drawings without creative work.
Fig. 1 is a schematic structural view of a vehicle provided by some embodiments of the application;
Fig. 2 is a schematic explosive view of a battery provided by some embodiments of the application;
Fig. 3 is a schematic structural view of the battery module as shown in Fig. 2;
Fig. 4 is a schematic explosive view of a battery cell provided by an embodiment of the application;
Fig. 5 is a schematic structural view of a housing provided by some embodiments of the application;
Fig. 6 is a schematic enlarged view of the housing at the circle A as shown in Fig. 5;
Fig. 7 is a schematic sectional view of the housing as shown in Fig. 5;
Fig. 8 is a schematic enlarged view at the circle B of Fig. 7;
Fig. 9 is another schematic sectional view of the housing as shown in Fig. 5;
Fig. 10 is a schematic enlarged view at the circle C of Fig. 7;
Fig. 11 is still another schematic sectional view of the housing as shown in Fig. 5;
Fig. 12 is a schematic structural view of a housing provided by some further embodiments of the application;
Fig. 13 is a schematic enlarged view of the housing at the circle D as shown in Fig. 12;
Fig. 14 is a schematic sectional view of a battery cell provided by some embodiments of the application;
Fig. 15 is another schematic sectional view of a battery cell provided by some embodiments of the application;
Fig. 16 is a schematic enlarged view at the circle E of Fig. 15;
Fig. 17 is a schematic sectional view of an electrode assembly of a battery cell provided by some embodiments of the application;
Fig. 18 is a schematic structural view of a first side plate of a housing provided by some embodiments of the application.

The reference numbers in the detailed embodiments are as follows:
1 vehicle; 2 battery; 3 controller; 4 motor; 5 case; 5a first case portion; 5b second case portion; 5c accommodation space; 6 battery module; 7 battery cell;
10 electrode assembly; 11 body portion; 111 straight section; 112 bent section; 12 electrode tab; 10a first electrode sheet; 10b second electrode sheet; 10c separator;
20 housing; 21 first side plate; 211 first plate portion; 212 second plate portion; 213 third plate portion; 214 first transition portion; 215 second transition portion; 22 second side plate; 221 recess; 221a side surface; 221b bottom surface; 222 thinned region; 23 first connection plate; 24 third side plate; 25 second connection plate; 20a opening;
30 end cap; 40 electrode terminal; 50 insulation member,
G gap; W welding portion; X first direction; Y second direction; Z third direction.

### DETAILED DESCRIPTION

In order to make the purpose, the solution and the advantages of the embodiments of the application clearer, the technical solution of the embodiments of the application will be described clearly below with reference to the accompanying drawings. It is obvious that the embodiments as described are only a part of the embodiments of the application, rather than all of the embodiments. Based on the embodiments of the application, all other embodiments obtained by a person of ordinary skill in the art without creative efforts shall fall within the protection scope of the application.

Unless otherwise defined, all the technical and scientific terms used in the application have the same meanings as commonly understood by a person skilled in the art of the application. The terms used in the description of this application is for the purpose of describing specific embodiments only and is not intended to limit the application. The terms "comprise", "have" and any variations thereof in the description and claims of the application and the brief description of the drawings above are intended to cover non-exclusive inclusions. The terms "first", "second" and the like in the description and claims of the application or in the aforesaid drawings are used to distinguish different objects and are not used to describe a particular order or primary-secondary relationship.

Reference to "embodiment" in the application means that the specific features, structures, or characteristics described in connection with the embodiment may be included in at least one embodiment of the application. The presence of this phrase at various locations in the description does not necessarily refer to the same embodiment, nor is it a separate or alternative embodiment that is mutually exclusive from other embodiments.

In the description of the application, it is noted that, except as otherwise stipulated or limited explicitly, the terms "mount", "link", "connect", "attach" shall be interpreted expansively, for example, it may be fixed connection, removable connection or integral connection; may be direct connection or indirect connection via an intermediate medium, or may be communication inside two elements. For a person of ordinary skill in the art, the specific meaning of the above terms in the application can be interpreted depending on the specific situation.

In the application, the term "and/or" is merely to describe an association relationship of associated objects, meaning that there may be three relationship, for example, A and/or B may mean three cases that A exists alone, A and B exist simultaneously, and B exists alone. In addition, the character "/" in the application generally indicates that the related objects before and after have an "or" relationship.

In the embodiments of the application, the same reference numerals denote the same components, and in the different embodiments, detailed description of the same components is omitted for brevity. It should be understood that the thickness, length, width, and the like of the various components, and the overall thickness, length, width, and the like of the integrated device in the embodiments of the application shown in the drawings are merely illustrative and should not be construed as limiting of the application.

Reference to "a plurality of" in the application means two or more (including two).

In the application, the term "parallel" includes not only the case of being absolutely parallel, but also the case of being approximately parallel as conventionally understood in engineering; at the same time, "vertical" also includes not only the case of being absolutely vertical, but also the case of being approximately vertical as conventionally understood in engineering.

In the application, the battery cell may include a lithium ion secondary battery cell, a lithium ion primary battery cell, a lithium sulfur battery cell, a sodium lithium ion battery cell, a sodium ion battery cell, a magnesium ion battery cell, or the like, which is not limited by the embodiments of the application.

The battery mentioned in the embodiments of the application refers to a single physical module including one or more battery cells to provide higher voltage and capacity. For example, the battery mentioned in the application may be a battery module or a battery pack or the like. The battery generally includes a case for packaging one or more battery cells. The case can prevent liquid or other foreign matter from affecting the charging or discharging of the battery cell.

The battery cell includes an electrode assembly and electrolyte solution, and the electrode includes a positive electrode sheet, a negative electrode sheet, and a separator. The battery cell operates mainly by moving metal ions between the positive and negative electrode sheets. The positive electrode sheet includes a positive electrode current collector and a positive electrode active material layer coated on a surface of the positive electrode current collector. The positive electrode current collector includes a positive electrode current collecting portion and a positive electrode tab. The positive electrode current collecting portion is coated with the positive electrode active material layer, and the positive electrode tab is not coated with the positive electrode active material layer. Taking a lithium ion battery as an example, the material of the positive electrode current collector may be aluminum, the positive electrode active material layer includes a positive electrode active material, and the positive electrode active material may be lithium cobaltate, lithium iron phosphate, lithium ternary or lithium manganate, or the like. The negative electrode sheet includes a negative electrode current collector and a negative electrode active material layer coated on a surface of the negative electrode current collector. The negative electrode current collector includes a negative electrode current collecting portion and a negative electrode tab. The negative electrode current collecting portion is coated with the negative electrode active material layer, and the negative electrode tab is not coated with the negative electrode active material layer. The material of the negative electrode current collector may be copper, the negative electrode active material layer includes a negative electrode active material, and the negative electrode active material may be carbon, silicon, or the like. The material of the separator may be PP (polypropylene) or PE (polyethylene) or the like.

The battery cell further includes a housing and an end cap. The housing has an opening, and the end cap is capped and sealingly connected to the opening so as to form a sealed space for accommodating the electrode assembly and the electrolyte solution.

The inventor tried to reduce the wall thickness of the housing overall to increase the internal space of the housing, enhance the energy density of the battery cell, and improve the charge-discharge performance of the battery cell.

The inventor has found that the portion of the housing close to the opening is required to be connected to the end cap, and if the thickness of the housing is reduced, the connection strength between the housing and the end cap may be affected; affected by the end cap, the portion of the housing close to the opening is also vulnerable to the risk of cracking. For example, in the related technology, the housing and the end cap are connected by welding, and after welding, the housing forms a heat-affected region near the molten pool, and the heat-affected region is subjected to residual thermal stress, resulting in a lower strength of the heat-affected region as compared to the strength of the remaining regions; if the thickness of the housing is reduced, the housing may crack at the heat-affected region when the heat-affected region is compressed during use of the battery cell, resulting in leakage of the electrolyte solution leading to failure of the battery cell and safety risk.

The inventor has also found that the corners of the housing are prone to residual stress during forming the housing; if the thickness of the housing is reduced, the regions of the housing close to the corners are prone to cracking when the battery cell is subjected to an external impact, resulting in leakage of the electrolyte solution leading to failure of the battery cells and safety risk.

In view of this, the embodiments of the application provide a technical solution which thins a partial region of the housing to increase the internal space of the housing, enhance the energy density of the battery cell and ensure the strength of the portion close to the opening and the strength of the portion close to the corner of the housing, so that the risk of the housing cracking is reduced, the seal property is improved, and the potential safety hazard is reduced.

The technical solutions described in the embodiments of the application are applicable to batteries and electric devices employing batteries.

The electric device may be a vehicle, a mobile phone, a portable device, a notebook computer, a ship, a spacecraft, an electric toy and a power tool, etc. The vehicle may be a fuel, gas or new energy vehicle. The new energy vehicle may be a pure electric vehicle, a hybrid vehicle, an extended-range vehicle, etc. The spacecraft includes an airplane, a rocket, an aerospace plane, a spaceship, etc. The electric toy includes a fixed or movable electric toy, for example, a game machine, an electric car toy, an electric ship toy, and an electric airplane toy, etc. The power tool includes a metal cutting power tool, a grinding power tool, an assembly power tool, and a railway power tool, for example, an electric drill, an electric grinder, an electric wrench, an electric screwdriver, an electric hammer, an impact electric drill, a concrete vibrator and an electric planer, etc. The embodiments of the application have no particular limitation to the above electric device.

For ease of description, the following embodiments take a vehicle as an example of the electric device for explanation.

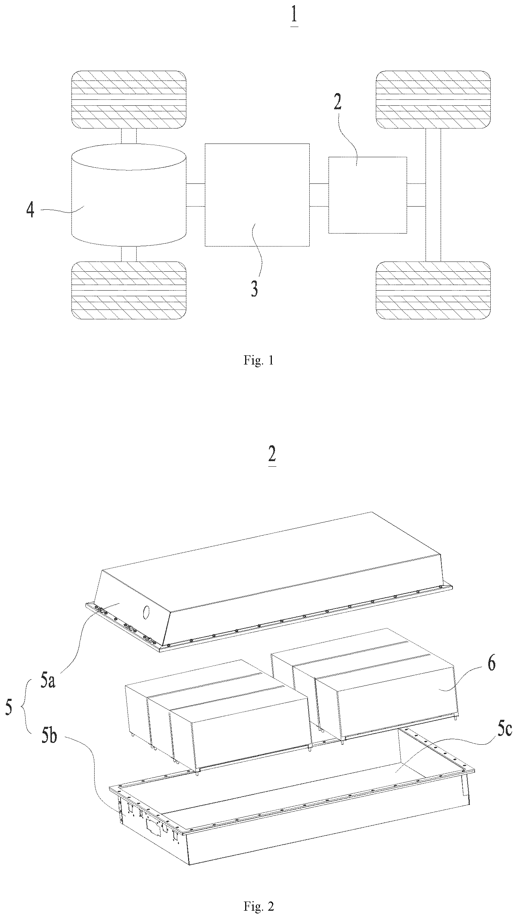

Fig. 1 is a schematic structural view of a vehicle provided by some embodiments of the application.

As shown in Fig. 1, a battery 2 is provided inside the vehicle 1, and the battery 2 may be disposed at a bottom or a head or a rear of the vehicle 1. The battery 2 may be used for powering the vehicle 1. For example, the battery 2 may serve as an operational power source for the vehicle 1.

The vehicle 1 may also include a controller 3 and a motor 4. The controller 3 is used for controlling the battery 2 to power the motor 4, for example, for operational power requirements during start-up, navigation and traveling of the vehicle 1.

In some embodiments of the application, the battery 2 may serve not only as an operational power source for the vehicle 1, but also as a drive power source for the vehicle 1 to provide a drive power for the vehicle 1 instead of or partially instead of fuel or natural gas.

Fig. 2 is a schematic explosive view of a battery provided by some embodiments of the application.

As shown in Fig. 2, the battery 2 includes a case 5 and a battery cell (not shown in Fig. 2), and the battery cell is accommodated in the case 5.

The case 5 is used for accommodating the battery cell, and the case 5 may have various structures. In some embodiments, the case 5 may include a first case portion 5a and a second case portion 5b capped by each other. The first case portion 5a and the second case portion 5b together define an accommodation space 5c for accommodating the battery cell. The second case portion 5b may be of a hollow structure with one end open, the first case portion 5a is of a plate-like structure, and the first case portion 5a is capped to the open side of the second case portion 5b to form the case 5 with the accommodation space 5c. Also, each of the first case portion 5a and the second case portion 5b may be of a hollow structure with one side open, and the open side of the first case portion 5a is capped to the open side of the second case portion 5b to form the case 5 with the accommodation space 5c. Of course, the first case portion 5a and the second case portion 5b may have various shapes, such as a cylinder, a cuboid and the like.

In order to increase the seal property after the first case portion 5a and the second case portion 5b are connected, a seal member, such as seal glue or a seal ring, may be provided between the first case portion 5a and the second case portion 5b.

If the first case portion 5a is capped on the top of the second case portion 5b, the first case portion 5a may also be referred to as an upper case cover, and the second case portion 5b may also be referred to as a lower case body.

In the battery 2, the amount of battery cell may be single or plural. If there are a plurality of battery cells, the plurality of battery cells may be connected in series or in parallel or in a mixed manner, wherein the mixed manner means that the plurality of battery cells are connected both in series and in parallel. The plurality of battery cells may be directly connected together in series or in parallel or in the mixed manner, and the entirety constituted by the plurality of battery cells is accommodated in the case 5. Of course, the plurality of battery cells may also be connected in series or in parallel or in the mixed manner to form battery modules 6 at first, and then a plurality of battery modules 6 may be connected in series or in parallel or in the mixed manner to form an entirety and be accommodated in the case 5.

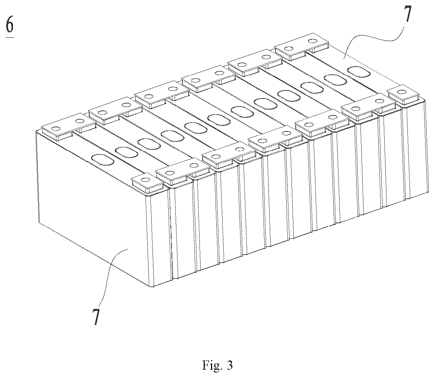

Fig. 3 is a schematic structural view of the battery module as shown in Fig. 2.

As shown in Fig. 3, in some embodiments, there are a plurality of battery cells 7, and the plurality of battery cells 7 are connected in series or in parallel or in the mixed manner to form battery modules 6 at first. Then a plurality of battery modules 6 are connected in series or in parallel or in the mixed manner to form an entirety and are accommodated in the case.

The plurality of battery cells 7 in a battery module 6 may be electrically connected by a bus member to achieve a parallel or series or mixed connection of the plurality of battery cells 7 in the battery module 6.

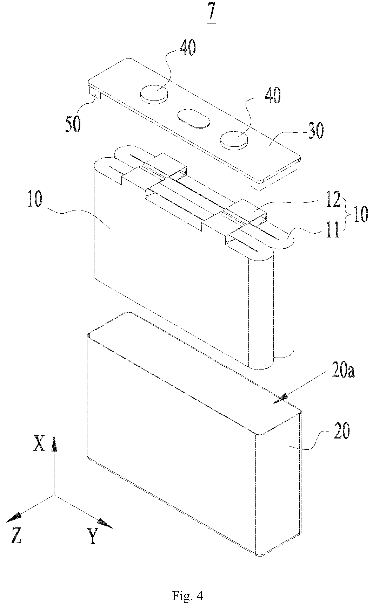

Fig. 4 is a schematic explosive view of a battery cell provided by an embodiment of the application;
As shown in Fig. 4, the battery cell 7 includes an electrode assembly 10, a housing 20 and an end cap 30. The end of the housing 20 in the first direction X has an opening 20a, the electrode assembly 10 is accommodated in the housing 20, and the end cap 30 is used to be capped to the opening 20a.

The housing 20 is of a hollow structure in which an accommodation cavity for accommodating the electrode assembly 10 and the electrolyte solution is formed. The housing 20 may have various shapes such as a cylinder, a cuboid and the like. The shape of the housing body 20 may be determined according to a specific shape of the electrode assembly 10. For example, if the electrode assembly 10 is of a cuboid structure, the housing body may be selected to be cuboid.

The end cap 30 is sealingly connected to the housing 20 so as to form a sealed space for accommodating the electrode assembly 10 and the electrolyte solution. For example, the end cap 30 is connected to the housing 20 by welding. Welding may achieve sealing and fixing between the end cap 30 and the housing 20 simultaneously.

In some examples, one end of the housing 20 in the first direction X has an opening 20a, and the amount of the end cap 30 is one and the end cap 30 is capped to the opening 20a of the housing 20. In other examples, each of the two ends of the housing 20 in the first direction X has an opening 20a, and there are two end caps 30 capped to the two openings 20a of the housing 20 respectively.

For example, the first direction X is parallel to the thickness direction of the end cap 30.

The electrode assembly 10 is a core member of the battery cell 7 for performing a charge-discharge function, and includes a first electrode sheet, a second electrode sheet, and a separator. The first electrode sheet and the second electrode sheet have opposite polarities. The separator serves to insulate the first electrode sheet from the second electrode sheet. The electrode assembly 10 operates mainly by moving metal ions between the first electrode sheet and the second electrode sheet.

One of the first and second electrode sheets is a positive electrode sheet, and the other of the first and second electrode sheets is a negative electrode sheet.

The electrode assembly 10 may be of a wound structure, a laminated structure, or a structure in other form. There may be one or more first electrode sheets, and there may be one or more second electrode sheets. The amount of the first and second electrode sheets may be determined according to the structure of the electrode assembly 10.

The amount of the electrode assembly 10 may be one or more, which is not limited in this embodiment.

In some embodiments, the battery cell 7 further includes two electrode terminals 40 mounted to the end cap 30 for electrical connection with the first and second electrode sheets respectively so as to lead out the electrical energy generated by the electrode assembly 10.

In some embodiments, the electrode assembly 10 includes a body portion 11 and an electrode tab 12 connected to the body portion 11. The body portion 11 is an electricity generation portion of the electrode assembly 10, and an active material inside the body portion 11 is used for electrochemical reaction with electrolyte solution or the like to generate a charge-discharge process. The electrode tab 12 is led out from an end of the body portion 11 and is used to be connected to the electrode terminal 40 to lead out the electric energy generated by the body portion 11.

The body portion 11 includes a positive electrode current collector, a positive electrode active material layer, a negative electrode current collector, a negative electrode active material layer and a separator. The electrode tab 12 includes a positive electrode tab and a negative electrode tab.

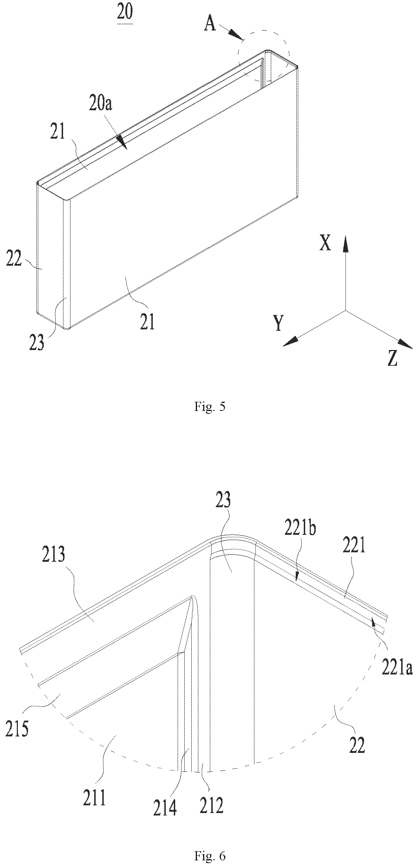

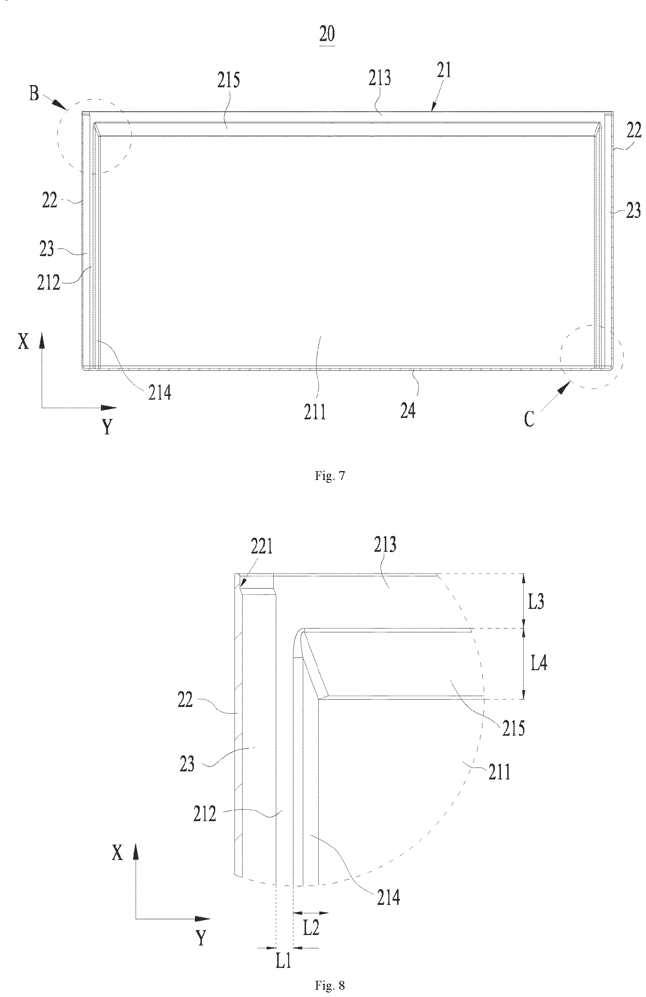

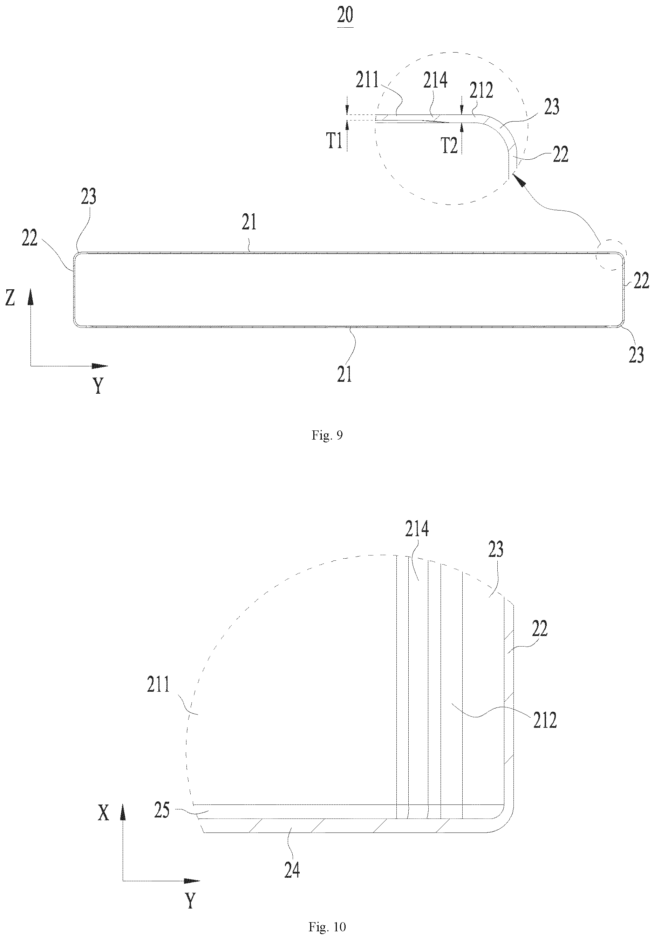

Fig. 5 is a schematic structural view of a housing provided by some embodiments of the application; Fig. 6 is a schematic enlarged view of the housing at the circle A as shown in Fig. 5; Fig. 7 is a schematic sectional view of the housing as shown in Fig. 5; Fig. 8 is a schematic enlarged view at the circle B of Fig. 7; Fig. 9 is another schematic sectional view of the housing as shown in Fig. 5.

As shown in Figs. 5-9, the embodiments of the application provide a housing 20, and the housing 20 has an opening 20a at an end in a first direction X. The housing 20 includes a first side plate 21, a second side plate 22 and a first connection plate 23. The first side plate 21 and the second side plate 22 are arranged in the circumferential direction of the opening 20a, the first connection plate 23 are connected between the first side plate 21 and the second side plate 22, and at least a part of the first connection plate 23 is arcuate. The first side plate 21 includes a first plate portion 211, a second plate portion 212 and a third plate portion 213. The second plate portion 212 is connected between the first plate portion 211 and the first connection plate 23, and the third plate portion 213 is located at the side of the first plate portion 211 close to the opening 20a. The thickness of the first plate portion 211 is less than the thickness of the second plate portion 212 and the thickness of the third plate portion 213.

The housing 20 may be provided with an opening 20a only at one end in the first direction X, or may be provided with openings 20a at both ends in the first direction X.

For example, the first side plate 21 and the second side plate 22 are substantially of a plate-like structure parallel to the first direction X.

The amount of the first side plate 21 may be one or may be plural, which may be set according to the shape of the housing 20. The amount of the second side plate 22 may be one or may be plural, which may be set according to the shape of the housing 20.

The first connection plate 23 may be bent into an arcuate shape as a whole, or may be only partially bent into an arcuate shape. In some examples, the first connection plate 23 is bent into a circular arcuate shape.

Depending on the amount and position of the openings 20a, the third plate portion 213 may be arranged at one side of the first plate portion 211 in the first direction X or at both sides of the first plate portion 211 in the first direction X.

The first plate portion 211 is connected to the second plate portion 212. The first plate portion 211 may be connected directly to the second plate portion 212, or may be connected indirectly to the second plate portion 212 via another portion of the first side plate 21.

The first plate portion 211 is connected to the third plate portion 213. The first plate portion 211 may be connected directly to the third plate portion 213, or may be connected indirectly to the third plate portion 213 via another portion of the first side plate 21.

The second plate portion 212 is connected to the third plate portion 213. The second plate portion 212 may be connected directly to the third plate portion 213, or may be connected indirectly to the third plate portion 213 via another portion of the first side plate 21.

Each of the thickness of the second plate portion 212 and the thickness of the third plate portion 213 is greater than the thickness of the first plate portion 211. In the embodiments of the application, the thickness relationship between the second plate portion 212 and the third plate portion 213 is not limited, and the thickness of the second plate portion 212 may be greater than, equal to, or less than the thickness of the third plate portion 213.

This embodiment may reduce the thickness of the first plate portion 211 of the first side plate 21 to increase the internal space of the housing 20 and reserve more space for the electrode assembly 10 and the electrolyte solution, thereby enhancing the energy density of the battery cell 7 and improving the charge-discharge performance of the battery cell 7. The arcuate part of the first connection plate 23 may release stress and reduce stress concentration during forming the housing 20; the thickness of the second plate portion 212 is greater than the thickness of the first plate portion 211, so that the second plate portion 212 close to the first connection plate 23 has a higher strength than the first plate portion 211, so as to reduce a risk of the second plate portion 212 cracking when the battery cell 7 is subjected to an external impact and provide security. Since the thickness of the third plate portion 213 is greater than the thickness of the first plate portion 211, the third plate portion 213 may be used to be connected to the end cap 30 of the battery cell 7, so as to enhance the connection strength between the housing 20 and the end cap 30, reduce a risk of the housing 20 cracking and enhance security.

In some embodiments, the second plate portion 212 is connected directly to the third plate portion 213 to enhance the overall strength of the first side plate 21 and reduce a risk of the first side plate cracking 21.

In some embodiments, the thickness of the second plate portion 212 is equal to the thickness of the third plate portion 213 in order to reduce difficulty of forming the housing 20.

In some embodiments, the thickness of the first plate portion 211 is T1, the thickness of the second plate portion 212 is T2, and T1 and T2 satisfy: 0.05mm≤T2-T1≤1mm.

When the value of T1 is determined, the larger T2 is, the higher the strength of the second plate portion 212 is, while the smaller the internal space of the housing 20 is; when the value of T1 is determined, the smaller T2 is, the lower the strength of the second plate portion 212 is, while the larger the internal space of the housing 20 is. When the value of T2 is determined, the larger T1 is, the higher the strength of the first plate portion 211 is, while the smaller the internal space of the housing 20 is; when the value of T2 is determined, the smaller T1 is, the lower the strength of the first plate portion 211 is, while the larger the internal space of the housing 20 is. In order to balance the strength of the housing 20 and the capacity of the housing 20, the embodiment limits the value of T2-T1 to 0.05mm-1mm.

In some embodiments, the value of T2-T1 may be 0.05mm, 0.1mm, 0.2mm, 0.5mm, 0.7mm, 0.9mm or 1mm.

In some embodiments, T1 and T2 satisfy: 0.1mm≤T2-T1≤0.7mm.

In some embodiments, the thickness T1 of the first plate portion 211 is 0.1mm-0.8mm. The smaller the value of T1 is, the lower the strength of the first plate portion 211 is, and the higher the risk of cracking when the battery cell 7 is subjected to an external impact is; the larger the value of T1 is, the larger the weight and occupied space of the first plate portion 211 is, and the lower the energy density of the battery cell 7 is. In this embodiment, the thickness T1 of the first plate portion 211 is limited to 0.1mm-0.8mm in order to balance the strength of the housing 20 and the energy density of the battery cell 7.

Optionally, the thickness T1 of the first plate portion 211 is 0.1mm, 0.3mm, 0.5mm, 0.7mm or 0.8mm.

In some embodiments, the thickness T2 of the second plate portion 212 is 0.4mm-1.5mm. The smaller the value of T2 is, the lower the strength of the second plate portion 212 is, and the higher the risk of cracking when the battery cell 7 is subjected to an external impact is; the larger the value of T2 is, the larger the weight and occupied space of the second plate portion 212 is, and the lower the energy density of the battery cell 7 is. In this embodiment, the thickness T1 of the second plate portion 212 is limited to 0.4mm-1.5mm in order to balance the strength of the housing 20 and the energy density of the battery cell 7.

Optionally, the thickness T2 of the second plate portion 212 is 0.4mm, 0.5mm, 0.8mm, 1mm, 1.2mm or 1.5mm.

In some embodiments, the first side plate 21 further includes a first transition portion 214 connected between the first plate portion 211 and the second plate portion 212. In the direction from the first plate portion 211 towards the second plate portion 212, the thickness of the first transition portion 214 increases gradually.

This embodiment, by providing the first transition portion 214, may achieve a smooth transition between the first plate portion 211 and the second plate portion 212, reduce difficulty of forming the housing 20, reduce stress concentration and reduce the risk of the first side plate 21 cracking.

In some embodiments, the inner surface of the first transition portion 214 may be an inclined surface or an arcuate surface.

In some embodiments, the thickness of the end of the first transition portion 214 connected to the second plate portion 212 is equal to the thickness of the second plate portion 212, and the thickness of the end of the first transition portion 214 connected to the first plate portion 211 is equal to the thickness of the first plate portion 211.

In some embodiments, each of the first plate portion 211, the second plate portion 212 and the third plate portion 213 is of a flat-plate structure with a uniform thickness.

In some embodiments, the first plate portion 211 and the second plate portion 212 are arranged in a second direction Y perpendicular to the first direction X. The size of the second plate portion 212 in the second direction Y is L1, the size of the first transition portion 214 in the second direction Y is L2, and L1 and L2 satisfy: 0.2≤L1/L2≤5.

When the value of L1+L2 is constant, the smaller the value of L1/L2 is, the larger the acting force transmitted to the first transition portion 214 during forming the housing 20 is, and the higher the risk of the first transition portion 214 cracking is; when the value of L1+L2 is constant, the larger the value of L1/L2 is, the steeper the transition surface of the first transition portion 214 is, the more obvious the step formed between the first plate portion 211 and the second plate portion 212 is, and the higher the difficulty of forming the housing 20 is. In the embodiments of the application, the value of L1/L2 is limited to 0.2-5 in order to balance the forming difficulty and strength of the housing 20.

Optionally, the value of L1/L2 is 0.2, 0.4, 0.5, 1, 2, 2.5 or 5.

In some embodiments, the size L1 of the second plate portion 212 in the second direction Y is 0.5mm-10mm. Optionally, L1 is 0.5mm, 1mm, 2mm, 5mm, 8mm or 10mm.

In some embodiments, the size L2 of the first transition portion 214 in the second direction Y is 0.5mm-10mm. Optionally, L2 is 0.5mm, 1mm, 2mm, 5mm, 8mm or 10mm.

In some embodiments, the housing 20 includes two first side plates 21 and two second side plates 22. The two second side plates 22 are arranged opposite in the second direction Y, and the two first side plates 21 are arranged opposite in the third direction Z. Each two of the first direction X, the second direction Y and the third direction Z are perpendicular to each other. The first side plate 21 and the second side plate 22 which are adjacent to each other are connected by the first connection plate 23. The first side plate 21 is provided with two second plate portions 212 arranged at opposite sides of the first plate portion 211 in the second direction Y respectively.

In this embodiment, the area of the first side plate 21 and the area of the second side plate 22 are not limited, and the area of the first side plate 21 may be greater than, equal to or less than the area of the second side plate 22.

The two first side plates 21 and the two second side plates 22 are arranged alternately in the circumferential direction of the opening 20a. For example, there may be four first connection plates 23, and each of the first connection plates 23 connects the first side plate 21 and the second side plate 22 which are adjacent to each other.

Two first connection plates 23 are connected to the first plate portion 211 through two second plate portions 212 respectively, and during forming the housing 20, the second plate portions 212 have a higher strength, so that they can withstand the stress transmitted from the first connection plates 23, thereby reducing the risk of cracking and providing security.

In some embodiments, the size of the first side plate 21 in the second direction Y is greater than the size of the second side plate 22 in the third direction Z.

Since the first side plate 21 has a larger area as compared to the second side plate 22, the region where the first side plate 21 can be thinned is larger, so that the internal space of the housing 20 may be effectively increased to enhance the capacity of the battery cell 7.

In some embodiments, the second plate portion 212 and the third plate portion 213 protrude out of the inner surface of the first plate portion 211.

In some embodiments, the outer surface of the first plate portion 211, the outer surface of the second plate portion 212 and the outer surface of the third plate portion 213 are flush with each other.

The outer surface of the first plate portion 211 is the surface of the first plate portion 211 away from the electrode assembly 10, the outer surface of the second plate portion 212 is the surface of the second plate portion 212 away from the electrode assembly 10, and the outer surface of the third plate portion 213 is the surface of the third plate portion 213 away from the electrode assembly 10.

This embodiment may ensure the flatness of the outer surface of the first side plate 21 and improve the appearance of the housing 20.

In some embodiments, the first side plate 21 further includes a second transition portion 215 connected between the first plate portion 211 and the third plate portion 213. In the direction from the first plate portion 211 towards the third plate portion 213, the thickness of the second transition portion 215 increases gradually.

The second transition portion 215 may achieve a smooth transition between the first plate portion 211 and the third plate portion 213, reduce difficulty of forming the housing 20, reduce stress concentration and reduce the risk of the first side plate 21 cracking.

In some embodiments, the second transition portion 215 is connected to the first transition portion 214.

In some embodiments, the inner surface of the second transition portion 215 facing towards the electrode assembly 10 may be an inclined surface or an arcuate surface.

In some embodiments, the thickness of the end of the second transition portion 215 connected to the third plate portion 213 is equal to the thickness of the third plate portion 213, and the thickness of the end of the second transition portion 215 connected to the first plate portion 211 is equal to the thickness of the first plate portion 211.

In some embodiments, the size of the third plate portion 213 in the first direction X is L3, the size of the second transition portion 215 in the first direction X is L4, and L3 and L4 satisfy: 0.3≤L3/L4≤3

When the value of L3+L4 is constant, the smaller the value of L3/L4 is, the smaller the region of the first side plate 21 for connection with the end cap 30 is, the lower the connection strength between the housing 20 and the end cap 30 is, the larger the acting force transmitted to the second transition portion 215 during assembly of the housing 20 and the end cap 30 is, and the higher the risk of the second transition portion 215 cracking is, when the value of L3+L4 is constant, the larger the value of L3/L4 is, the steeper the transition surface of the second transition portion 215 is, the more obvious the step formed between the first plate portion 211 and the third plate portion 213 is, and the higher the difficulty of forming the housing 20 is. In the embodiments of the application, the value of L3/L4 is limited to 0.3-3 in order to balance the difficulty of forming the housing 20 and the connection strength between the housing 20 and the end cap 30.

Optionally, the value of L3/L4 is 0.3, 0.5, 0.8, 1, 2 or 3.

In some embodiments, the size L3 of the third plate portion 213 in the first direction X is 0.3mm-10mm. Optionally, L3 is 0.3mm, 0.5mm, 1mm, 2mm, 5mm, 8mm or 10mm.

In some embodiments, the size L4 of the second transition portion 215 in the first direction X is 0.3mm-10mm. Optionally, L4 is 0.3mm, 0.5mm, 1mm, 2mm, 5mm, 8mm or 10mm.

In some embodiments, the second side plate 22 is provided with a recess 221 sunk from an end surface of the second side plate 22 in the first direction X. A thickness of a portion of the second side plate 22 corresponding to a side surface 221a of the recess 221 is greater than the thickness of the first plate portion 211.

The bottom surface 221b of the recess 221 may be used to support the end cap 30 and is able to limit the end cap 30 during the end cap 30 being inserted into the housing 20 to prevent the end cap 30 from being excessively inserted into the housing 20. The portion of the second side plate 22 corresponding to the side surface 221a of the recess 221 may be used to be connected to the end cap 30, and even if the second side plate 22 is provided with the recess 221 in this embodiment, the strength of the portion of the second side plate 22 corresponding to the side surface 221a of the recess 221 can be ensured to reduce the risk of the second side plate 22 cracking.

In some embodiments, the bottom surface 221b of the recess 221 may be a flat surface. The included angle between the bottom surface 221b of the recess 221 and the side surface 221a of the recess 221 may be 80°-170°.

In some embodiments, the portion of the second side plate 22 corresponding to the side surface 221a of the recess 221 is welded to the end cap 30.

In some embodiments, the first connection plate 23 is also provided with a recess, and the recess of the first connection plate 23 is sunk from an end face of the first connection plate 23 in the first direction X. For example, the recess of the first connection plate 23 communicates with the recess 221 of the second side plate 22.

In some embodiments, in the first direction X, the end of the third plate portion 213 close to the first plate portion 211 goes beyond the bottom surface 221b of the recess 221.

The bottom surface 221b of the recess 221 is used to support the end cap 30 and limit the position of the end cap 30. In this embodiment, the end of the third plate portion 213 close to the first plate portion 211 goes beyond the bottom surface 221b of the recess 221, so that the end of the third plate portion 213 close to the first plate portion 211 goes beyond the end cap 30, thereby ensuring the strength of the portion of the first side plate 21 connected to the end cap 30, reducing the risk of the first side plate 21 cracking, and enhancing security.

The second side plate 22 has an inner surface facing towards the electrode assembly 10, and the inner surface of the second side plate 22 is connected to the bottom surface 221b of the recess 221. For example, the inner surface of the second side plate 22 is a flat surface, and the inner surface of the second side plate 22 is provided with no recess structure.

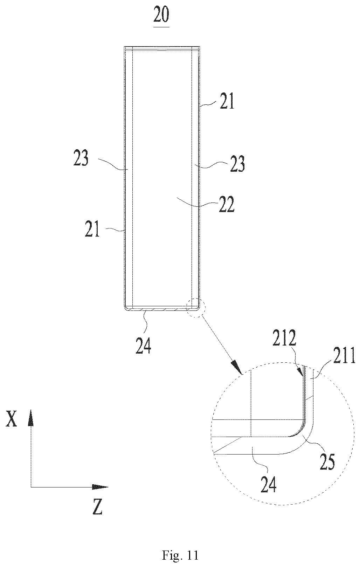

Fig. 10 is a schematic enlarged view at the circle C of Fig. 7; Fig. 11 is still another schematic sectional view of the housing as shown in Fig. 5.

As shown in Figs. 10 and 11, in some embodiments, in the first direction X, the end of the first plate portion 211 away from the third plate portion 213 is flush with the end of the second plate portion 212 away from the third plate portion 213. The second plate portion 212 may separate the first plate portion 211 from the first connection plate 23 to reduce the risk of the first plate portion 211 cracking.

In some embodiments, the third plate portion 213 and two second plate portions 212 form a U-shaped structure, and the first plate portion 211 is located in the region enclosed by the U-shaped structure.

In some embodiments, the housing 20 further includes a third side plate 24 and a second connection plate 25. The third side plate 24 and the opening 20a are arranged opposite in the first direction X, the second connection plate 25 is connected between the first side plate 21 and the third side plate 24, and at least a part of the second connection plate 25 is arcuate. The first plate portion 211 is connected directly to the second connection plate 25.

The arcuate part of the second connection plate 25 may release the stress during forming the housing 20 to reduce stress concentration. The first plate portion 211 is connected directly to the second connection plate 25, so that the step at the connection of the first plate portion 211 and the second connection plate 25 may be reduced, the risk of local compression of the electrode assembly 10 may be reduced, and the performance of the electrode assembly 10 may be improved.

In some embodiments, the thickness of the end of the second connection plate 25 connected directly to the first plate portion 211 is equal to the thickness of the first plate portion 211, so that the connection of the first plate portion 211 and the second connection plate 25 is in a smooth transition to reduce the risk of forming a step at the connection of the first plate portion 211 and the second connection plate 25.

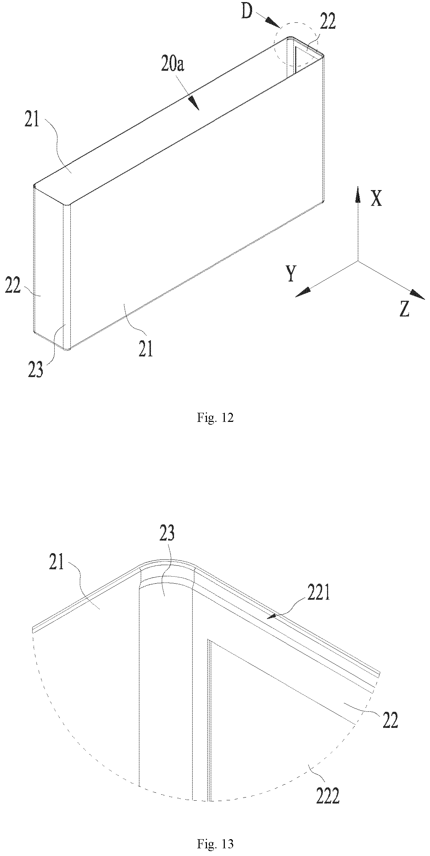

Fig. 12 is a schematic structural view of a housing provided by some further embodiments of the application; Fig. 13 is a schematic enlarged view of the housing at the circle D as shown in Fig. 12.

As shown in Figs. 12 and 13, in some embodiments, the second side plate 22 is provided with a thinned region 222 in the middle to increase the internal space of the housing 20. Optionally, the first side plate 21 is of a flat plate structure.

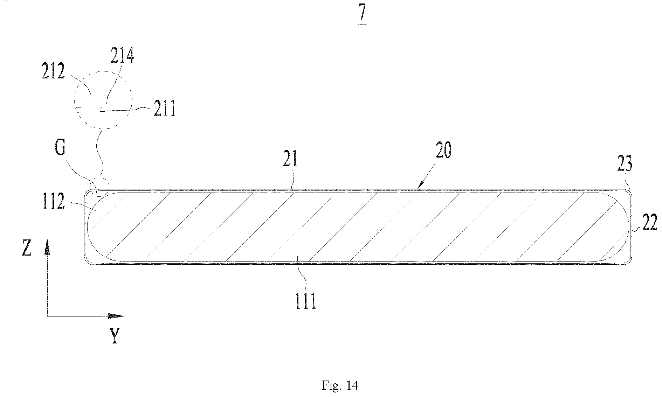

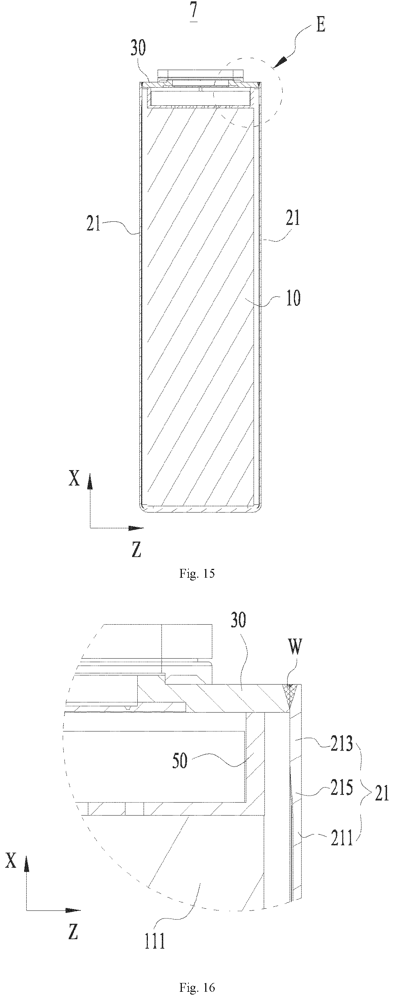

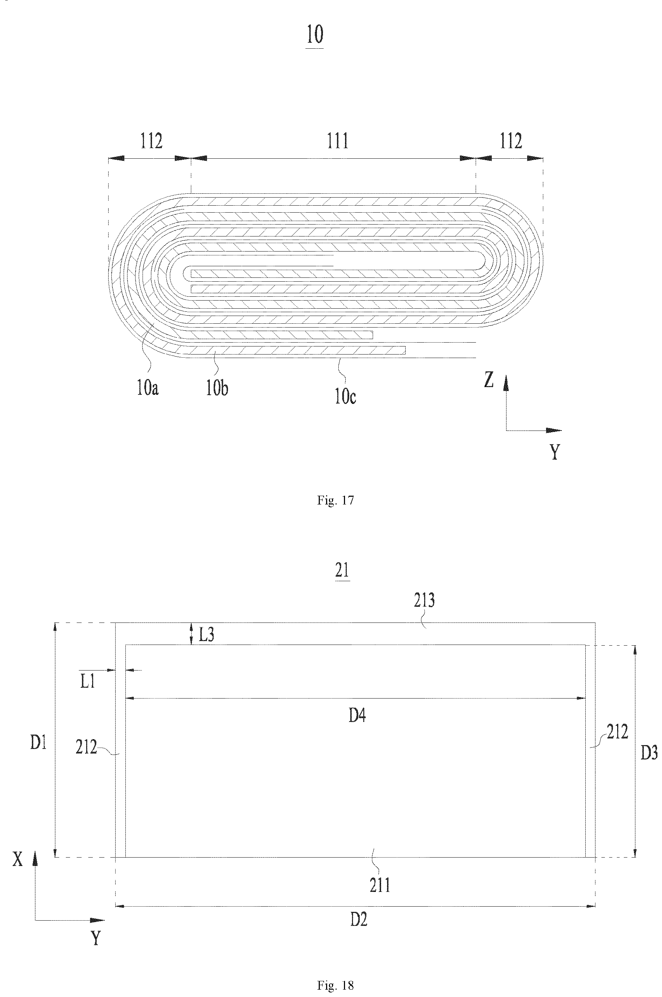

Fig. 14 is a schematic sectional view of a battery cell provided by some embodiments of the application; Fig. 15 is another schematic sectional view of the battery cell provided by some embodiments of the application; Fig. 16 is a schematic enlarged view at the circle E of Fig. 15; Fig. 17 is a schematic sectional view of an electrode assembly of the battery cell provided by some embodiments of the application.

As shown in Figs. 14-17, the battery cell 7 provided by the embodiments of the application includes a housing 20, an electrode assembly 10 and an end cap 30. The housing 20 may be a housing 20 of any of the aforesaid embodiments. The electrode assembly 10 is accommodated inside the housing 20, and in the thickness direction of the first side plate 21, a gap G is provided between the electrode assembly 10 and the second plate portion 212. The end cap 30 is used to cap the opening 20a and be connected to the third plate portion 213.

The gap G between the electrode assembly 10 and the second plate portion 212 may reduce the risk of the second plate portion 212 pressing the electrode assembly 10, reduce stress concentration, and improve the charge-discharge performance of the electrode assembly 10. Since the thickness of the third plate portion 213 is greater than the thickness of the first plate portion 211, the third plate portion 213 may be used to be connected to the end cap 30, so as to enhance the connection strength between the housing 20 and the end cap 30, reduce the risk of the housing 20 cracking and enhance security.

In some embodiments, the thickness direction of the first side plate 21 is parallel to the third direction Z.

In some embodiments, the third plate portion 213 is used to be welded to the end cap 30 to form a welding portion W. In the first direction X, the end of the third plate portion 213 close to the first plate portion 211 goes beyond the welding portion W.

After the welding portion W is formed, thermal stress may remain in the region of the third plate portion 213 close to the welding portion W. In this embodiment, the thickness of the third plate portion 213 close to the opening 20a is increased, and the end of the third plate portion 213 close to the first plate portion 211 goes beyond the welding portion W, so as to ensure the strength of the region of the first side plate 21 near the welding portion W, reduce the risk of the first side plate 21 cracking and enhance security.

In some embodiments, the electrode assembly 10 includes a first electrode sheet 10a, a separator 10c and a second electrode sheet 10b. The separator 10c is used to insulate the first electrode sheet 10a from the second electrode sheet 10b. In this embodiment, the first electrode sheet 10a, the separator and the second electrode sheet 10b may be sequentially laminated and wound two or more times to form the electrode assembly 10. The electrode assembly 10 is of a flat shape.

In some embodiments, the electrode assembly 10 is of a wound structure and includes a straight section 111 and a bent section 112. The bent section 112 is connected to an end of the straight section 111 in the second direction Y. Each two of the first direction X, the second direction Y and the thickness direction are perpendicular to each other. In the thickness direction, the first plate portion 211 covers at least a part of the straight section 111, the second plate portion 212 covers at least a part of the bent section 112, and a gap G is formed between the second plate portion 212 and the bent section 112. The thickness direction is parallel to the third direction Z.

The portion of each electrode sheet located in the straight region 111 is substantially in a straight state, and the portion of each electrode sheet located in the bent section 112 is substantially in a bent state. For example, the portion of the electrode sheet located in the bent section 112 may be circular arcuate.

Since the bent section 112 is in a bent state and occupies a smaller space in the thickness direction, the second plate portion 212 can utilize the space reserved by the bent section 112 to ensure the thickness of itself and reduce the risk of the second plate portion 212 pressing the electrode assembly 10.

In some embodiments, in the thickness direction, the second plate portion 212 does not overlap with the straight section 111.

In some embodiments, the body portion 11 of the electrode assembly 10 includes a straight section 111 and a bent section 112, and the electrode tab 12 is led out from the straight section 111.

In some embodiments, in the thickness direction, the projection of the active material layer (including the positive electrode active material layer and the negative electrode active material layer) in the straight section 111 is located within the projection of the first plate portion 211.

In some embodiments, in the thickness direction, the third plate portion 213 does not overlap with the straight section 111 so as to reduce the risk of the third plate portion 213 pressing the straight section 111 and reduce stress concentration on the straight section 111.

In some embodiments, the third plate portion 213 does not overlap with the bent section 112 in the thickness direction, so as to reduce the risk of the third plate portion 213 squeezing the bent section 112 and reduce the stress concentration in the bent section 112.

In some embodiments, the battery cell 7 further includes an insulation member 50 arranged at a side of the end cap 30 facing towards the straight area 111 and abutting with the straight area 111. In a direction away from the end cap 30, a surface of the insulation member 50 abutting with the straight area 111 goes beyond an end of the first plate portion 211 facing towards the third plate portion 213.

The insulation member 50 can insulate the end cap 30 and the straight section 111, so as to reduce the risk of the end cap 30 conducting the positive and negative electrode sheets in the straight section 111 and enhance security. The insulation member 50 abuts with the straight section 111 in the first direction X, so as to reduce the shaking amplitude of the straight region 111 when the battery cell 7 vibrates, reduce the risk of dislocation of the positive and negative electrode sheets, and improve the charge-discharge performance of the electrode assembly 10. The insulation member 50 can limit the position of the straight section 111 in the first direction X so as to reduce the possibility of the straight section 111 colliding with the third plate portion 213 when the battery cell 7 vibrates and reduce the risk of the third plate portion 213 cracking.

According to some embodiments of the application, the application further provides a battery including a plurality of battery cells according to any of the above embodiments.

According to some embodiments of the application, the application further provides an electric device including the battery cell according to any of the above embodiments used to provide electrical energy. The electric device may be any apparatus or system employing the battery cell described above.

According to some embodiments of the application, referring to Figs. 5-10, the application provides a cuboid housing 20, and the housing 20 has an opening 20a at an end in the first direction X. The housing 20 includes two first side plates 21, two second side plates 22 and four first connection plates 23. The two first side plates 21 and the two second side plates 22 are arranged alternately in the circumferential direction of the opening 20a. The first side plate 21 and the second side plate 22 which are adjacent to each other are connected by one first connection plate 23. At least a part of the first connection plate 23 is arcuate.

The first side plate 21 includes a first plate portion 211, two second plate portions 212, and a third plate portion 213; the two second plate portions 212 are located at opposite sides of the first plate portion 211 respectively, and each of the second plate portions 212 is connected between the first plate portion 211 and the corresponding first connection plate 23. The third plate portion 213 is located at the side of the first plate portion 211 close to the opening 20a. The thickness of the second plate portion 212 is equal to the thickness of the third plate portion 213, and the thickness of the second plate portion 212 is greater than the thickness of the first plate portion 211.

The first side plate 21 further includes a first transition portion 214 and a second transition portion 215. The first transition portion 214 is connected between the first plate portion 211 and the second plate portion 212. In a direction from the first plate portion 211 towards the second plate portion 212, a thickness of the first transition portion 214 increases gradually. The second transition portion 215 is connected between the first plate portion 211 and the third plate portion 213. In the direction from the first plate portion 211 towards the third plate portion 213, the thickness of the second transition portion 215 increases gradually.

The application will be further described below in conjunction with the embodiments.

For more clearly understanding of the inventive purpose, technical solution and beneficial technical effect of the application, the application will be described in further details in combination with the embodiments. However, it is to be appreciated that the embodiments of the application are only intended to explain the application rather than to limit the application and the embodiments of the application are not limited to those provided in the description. In the embodiments, if the specific experimental conditions or operating conditions are not indicated, it is to be prepared under conventional conditions or under conditions recommended by the material supplier.

Embodiment 1 may be prepared in the following steps:
(I) mixing the positive electrode active material NCM523, the conductive agent acetylene black and the binder PVDF at a mass ratio of 96:2:2, adding the solvent NMP, and stirring the mixture under the action of a vacuum mixer until the system is uniform in order to obtain the positive electrode slurry; uniformly coating the positive electrode slurry on the aluminum foil, drying at the room temperature, transferring the positive electrode slurry to an oven for continuous drying, then cold pressing, cutting, and slicing to obtain the first electrode sheet.
(II) mixing the mixture of the negative electrode active material graphite or graphite and other active materials at different mass ratios, conductive agent acetylene black, the thickener CMC, and the binder SBR at a mass ratio of 96.4:1:1.2:1.4, adding solvent deionize water, stirring the mixture under the action of a vacuum mixer until the system is uniform in order to obtain the negative electrode slurry; uniformly coating the negative electrode slurry on the copper foil, drying at the room temperature, transferring to an oven for continuous drying, then cold pressing, cutting, and slicing to obtain the second electrode sheet.
(III) mixing ethylene carbonate (EC), methyl ethyl carbonate (EMC) and diethyl carbonate (DEC) at a volume ratio of 1:1:1 to obtain the organic solvent, subsequently dissolving the sufficiently dried lithium salt LiPF6 in the mixed organic solvent in order to prepare the electrolytic solution with a concentration of 1mol/L.
(IV) using the polypropylene film with a thickness of 12µm as the separator.
(V) laminating the first electrode sheet, the separator and the second electrode sheet together and winding the same a plurality of turns, then flattening them into a flat shape in order to prepare the electrode assembly.
(VI) mounting the electrode assembly in a cuboid housing, and welding the housing and the end cap; then obtaining the battery cell through the processes of liquid injection, quiescence , formation, shaping and the like.

In step (VI), as shown in Figs. 5 and 18, the size of the housing 20 in the first direction X is 115mm, the size in the second direction Y is 237.5mm, and the size in the third direction Z is 32mm. The housing 20 includes two first side plates 21 arranged opposite in the third direction Z, and the size D1 of each of the first side plates 21 in the first direction X is 113mm and the size D2 in the second direction Y is 230mm.

The first side plate 21 includes a first plate portion 211, two second plate portions 212 and a third plate portion 213. The third plate portion 213 is located at the side of the first plate portion 211 close to the opening in the first direction X. The two second plate portions 212 are located at two sides of the first plate portion 211 in the second direction Y respectively. The two second plate portions 212 and the third plate portion 213 form a U-shaped structure. The size D3 of the first plate portion 211 in the first direction X is 103mm, the size D4 of the first plate portion 211 in the second direction Y is 220mm, the size L1 of the second plate portion 212 in the second direction Y is 5mm, and the size L3 of the third plate portion 213 in the first direction X is 10mm. The thickness T1 of the first plate portion 211 in the third direction Z is 0.5mm, the thickness T2 of the second plate portion 212 in the third direction Z is 0.7mm, and the thickness of the third plate portion 213 is equal to the thickness of the second plate portion 212.

Embodiment 2: the preparation method for a battery cell of Embodiment 2 makes reference to Embodiment 1 with a difference that T2 is 0.51mm.

Embodiment 3: the preparation method for a battery cell of Embodiment 3 makes reference to Embodiment 1 with a difference that T2 is 0.55mm.

Embodiment 4: the preparation method for a battery cell of Embodiment 4 makes reference to Embodiment 1 with a difference that T2 is 0.9mm.

Embodiment 5: the preparation method for a battery cell of Embodiment 5 makes reference to Embodiment 1 with a difference that T2 is 1mm.

Embodiment 6: the preparation method for a battery cell of Embodiment 6 makes reference to Embodiment 1 with a difference that T2 is 1.2mm.

Embodiment 7: the preparation method for a battery cell of Embodiment 7 makes reference to Embodiment 1 with a difference that T2 is 1.5mm.

Comparative Example: the preparation method for a battery cell of Comparative Example 1 makes reference to Embodiment 1 with a difference that the overall thickness of the first side plate of Comparative Example 1 is 0.5mm.

Each of Embodiments 1-7 and Comparative Example 1 prepares 100 battery cells, and perform a seal property test on each of the battery cells.

In particular, in a normal temperature environment, a battery cell is charged at a rate of 1C and discharged at a rate of 1C to perform a full-charge-and-discharge cycle test, until the capacity of the battery cell fades to 80% of the initial capacity; the battery cell is placed into a vacuum box and the vacuum box is vacuumized, and after 5 hours, a VOC tester (Model Number ppbRAE-3000) is utilized to detect the content of organic gas in the vacuum box in order to determine whether the battery cell leaks.

The evaluation results of Embodiments 1-7 and Comparative Example 1 are shown in Table 1.

**Table 1**

| | T1 (mm) | T2 (mm) | T2-T1 (mm) | Amount of leaking battery cells |
|---|---|---|---|---|
| Embodiment 1 | 0.5 | 0.7 | 0.2 | 0 |
| Embodiment 2 | 0.5 | 0.51 | 0.01 | 1 |
| Embodiment 3 | 0.5 | 0.55 | 0.05 | 0 |
| Embodiment 4 | 0.5 | 0.9 | 0.4 | 0 |
| Embodiment 5 | 0.5 | 1 | 0.5 | 0 |
| Embodiment 6 | 0.5 | 1.2 | 0.7 | 0 |
| Embodiment 7 | 0.5 | 1.5 | 1 | 0 |
| Comparative Example 1 | / | | | 3 |

Referring to Embodiments 1-7 and Comparative Example 1, with the thickness of the second plate portion larger than the thickness of the first plate portion, it is possible to reduce a risk of the housing cracking and enhance the seal property and security of the battery cells.

It should be noted that, in the case of no contradiction, the embodiments in the application and the features in the embodiments may be combined with each other.

At last, it should be appreciated that the above embodiments are only used to illustrate the technical solutions of the application but not to limit the same. A person of ordinary skill in the art is to understand that it is still possible to modify the technical solutions described in the above embodiments or equivalently replace some of the technical features thereof while the modifications and replacements shall not render the substance of the corresponding technical solutions deviate from the spirit and scope of the technical solutions in the various embodiments of the application.

## Claims

1. A housing of a battery cell, having an opening at an end in a first direction; the housing comprises a first side plate, a second side plate and a first connection plate, the first side plate and the second side plate are arranged in a circumferential direction of the opening, the first connection plate is connected between the first side plate and the second side plate, and at least a part of the first connection plate is arcuate;
the first side plate comprises a first plate portion, a second plate portion and a third plate portion, the second plate portion is connected between the first plate portion and the first connection plate, and the third plate portion is located at a side of the first plate portion close to the opening;
a thickness of the first plate portion is less than a thickness of the second plate portion and a thickness of the third plate portion.

2. The housing according to claim 1, wherein the second plate portion is connected directly to the third plate portion.

3. The housing according to claim 1 or 2, wherein the thickness of the second plate portion is equal to the thickness of the third plate portion.

4. The housing according to any of claims 1-3, wherein the thickness of the first plate portion is T1, the thickness of the second plate portion is T2, and T1 and T2 satisfy: 0.05mm≤T2-T1≤1mm.

5. The housing according to claim 4, wherein T1 and T2 satisfy: 0.1mm≤T2-T1≤0.7mm.

6. The housing according to claim 4 or 5, wherein the thickness T1 of the first plate portion is 0.1mm-0.8mm, and the thickness T2 of the second plate portion is 0.4mm-1.5mm.

7. The housing according to any of claims 1-6, wherein the first side plate further comprises a first transition portion connected between the first plate portion and the second plate portion;
in a direction from the first plate portion towards the second plate portion, a thickness of the first transition portion increases gradually.

8. The housing according to claim 7, wherein the first plate portion and the second plate portion are arranged in a second direction perpendicular to the first direction;
a size of the second plate portion in the second direction is L1, a size of the first transition portion in the second direction is L2, and L1 and L2 satisfy: 0.2≤L1/L2≤5.

9. The housing according to claim 8, wherein the size L1 of the second plate portion in the second direction is 0.5mm-10mm, and the size L2 of the first transition portion in the second direction is 0.5mm-10mm.

10. The housing according to any of claims 1-9, wherein in the first direction, an end of the first plate portion away from the third plate portion is flush with an end of the second plate portion away from the third plate portion.

11. The housing according to any of claims 1-10, further comprises a third side plate and a second connection plate;
the third side plate and the opening are arranged opposite in the first direction, the second connection plate is connected between the first side plate and the third side plate, and at least a part of the second connection plate is arcuate;
the first plate portion is connected directly to the second connection plate.

12. The housing according to any of claims 1-11, comprises two said first side plates and two said second side plates, two said second side plates are arranged opposite in a second direction, two said first side plates are arranged opposite in a third direction, and each two of the first direction, the second direction and the third direction are perpendicular to each other;
the first side plate and the second side plate adjacent to each other are connected by the first connection plate;
the first side plate is provided with two said second plate portions arranged at opposite sides of the first plate portion in the second direction respectively.

13. The housing according to claim 12, wherein a size of the first side plate in the second direction is greater than a size of the second side plate in the third direction.

14. The housing according to any of claims 1-13, wherein an outer surface of the first plate portion, an outer surface of second plate portion and an outer surface of the third plate portion are flush with each other;
the second plate portion and the third plate portion protrude out of an inner surface of the first plate portion.

15. The housing according to any of claims 1-14, wherein the first side plate further comprises a second transition portion connected between the first plate portion and the third plate portion;
in a direction from the first plate portion towards the third plate portion, a thickness of the second transition portion increases gradually.

16. The housing according to claim 15, wherein a size of the third plate portion in the first direction is L3, a size of the second transition portion in the first direction is L4, and L3 and L4 satisfy: 0.3≤L3/L4≤3.

17. The housing according to claim 16, wherein the size L3 of the third plate portion in the first direction is 0.3mm-10mm, and the size L4 of the second transition portion in the first direction is 0.3mm-10mm.

18. The housing according to any of claims 1-17, wherein the second side plate is provided with a recess sunk from an end surface of the second side plate in the first direction;
a thickness of a portion of the second side plate corresponding to a side surface of the recess is greater than the thickness of the first plate portion.

19. The housing according to claim 18, wherein in the first direction, an end of the third plate portion close to the first plate portion goes beyond a bottom surface of the recess.

20. A battery cell, comprising:
the housing according to any of claims 1-19;
an electrode assembly accommodated inside the housing, in a thickness direction of the first side plate, a gap being provided between the electrode assembly and the second plate portion; and
an end cap for capping the opening and being connected to the third plate portion.

21. The battery cell according to claim 20, wherein the third plate portion is used to be welded to the end cap and form a welding portion; in the first direction, the end of the third plate portion close to the first plate portion goes beyond the welding portion.

22. The battery cell according to claim 20 or 21, wherein the electrode assembly is of a wound structure and comprises a straight section and a bent section, the bent section is connected to an end of the straight section in the second direction, and each two of the first direction, the second direction and the thickness direction are perpendicular to each other;
in the thickness direction, the first plate portion covers at least a part of the straight section, the second plate portion covers at least a part of the bent section, and a gap is formed between the second plate portion and the bent section.

23. The battery cell according to claim 22, wherein in the thickness direction, the third plate portion does not overlap with the straight section, and the third plate portion does not overlap with the bent section.

24. The battery cell according to claim 22 or 23, further comprises an insulation member arranged at a side of the end cap facing towards the straight section and abutting with the straight section;
in a direction away from the end cap, a surface of the insulation member abutting with the straight section goes beyond an end of the first plate portion facing towards the third plate portion.

25. A battery, comprising the battery cell according to any of claims 1-24.

26. An electric device, comprising the battery cell according to any of claims 1-24 used to provide electrical energy.
